# EUROPÄISCHE PATENTANMELDUNG

(11) **EP 1 072 192 A1**
(43) Veröffentlichungstag der Anmeldung: **31.01.2001**
(21) Anmeldenummer: 00115125.7
(22) Anmeldetag: 12.07.2000
(51) Int. Cl.: A01N 43/80

(54) **Thermoplastische Polyurethane**

(30) Priorität: 27.07.1999 DE 19935112
(71) Anmelder: BASF AKTIENGESELLSCHAFT, 67056 Ludwigshafen (DE)
(72) Erfinder: Brüning, Ines, Dr., 49356 Diepholz (DE); Harrop, Douglas John, Broughton Astley (GB); Weigelt, Gerlinde, 49356 Diepholz (DE); Scholz, Günter, Dr., 49448 Lemförde (DE)

(57) **Zusammenfassung**

Thermoplastisches Polyurethan enthaltend Verbindungen, die Benzisothiazolinon als Struktureinheit aufweisen.

## Beschreibung

Die Erfindung bezieht sich auf thermoplastisches Polyurethan enthaltend Verbindungen, die Benzisothiazolinon als Struktureinheit aufweisen. Des weiteren bezieht sich die Erfindung auf Verfahren zur Herstellung solcher TPU, deren Verwendung und Mischungen dieser thermoplastischen Polyurethane mit weiteren thermoplastischen Kunststoffen. Die erfindungsgemäßen Verbindungen, die Benzisothiazolinon als Struktureinheit aufweisen, werden im Folgenden als "Inhibitoren" bezeichnet.

Thermoplastische Polyurethane, im Folgenden auch als TPU bezeichnet, und Verfahren zu deren Herstellung sind allgemein bekannt und vielfältig beschrieben. Bei den unterschiedlichsten Anwendungen dieser Kunststoffe ist oftmals die Stabilisierung der Materialien gegen Mikroben, d.h. beispielsweise Bakterien, Pilze, Schimmel, Algen oder kleinere Tiere, z.B. Muscheln erforderlich. Allgemein bekannt sind derartige Stabilisierungen in Antifouling-Anstrichen für Schiffe, im Schuhbereich (Badeschuhe, Sohlen), im Bereich von Beschichtungen, in Feuchträumen oder in Krankenhäusern. In der Vergangenheit kamen zur Stabilisierung vor allem organische Schwermetallverbindungen zum Einsatz, deren Verwendung aber aufgrund ihrer toxischen Eigenschaften zunehmend durch unbedenklichere Verbindungen ersetzt werden soll. Bekannte Inhibitoren sind aufgeführt in WO 98/17732 und US 42 84 444.

DE-A 40 27 378, JP 6 3273 662 und JP 5 0142 701 offenbaren den Einsatz von Benzisothiazolinonen als Stabilisatoren in Polyurethanen. Der Verwendung dieser Stabilisatoren in thermoplastischen Polyurethanen und insbesondere der Einsatz in seismischen Schläuchen oder Kabeln für marine Anwendungen, in denen eine besonders gute und aufwendige Stabilisierung notwendig ist, wird durch diese Schriften nicht beschrieben.

Im Bereich der marinen Anwendungen, beispielsweise in der seismischen Exploration in den Weltmeeren wird vielfach thermoplastisches Polyurethan eingesetzt. Aufgrund der guten Hydrolysestabilität insbesondere eines TPUs auf der Basis von Polyetherpolyolen, ihrer guten UV- und Kerosinbeständigkeit und der ausgezeichneten Transparenz eignet sich TPU sehr gut für die Anwendung als seismischer Schlauch oder Kabel, die beispielsweise als transparente, mit Kerosin gefüllte Schläuche die Meßinstrumente zur Untersuchung des Meeresbodens enthalten. Gerade bei diesen Anwendungen kann es verstärkt zu einer Besiedlung des TPUs mit Algen oder kleinen Tieren kommen, die das Gewicht der Schläuche und damit die Gefahr der Rißbildung und Oberflächenbeschädigung sowie den Gleitwiderstand im Wasser stark erhöhen. Ein TPU, das einer Besiedlung der Oberfläche insbesondere bei Anwendungen in der Marine vorbeugt, ist somit besonders erwünscht.

Ziel der vorliegenden Erfindung war es somit, TPU und/oder Mischungen enthaltend TPU sowie mindestens einen weiteren thermoplastisch verarbeitbaren Kunststoff zu entwickeln, die keine schwermetallhaltigen Stabilisatoren enthalten und in Meerwasser insbesondere als seismische Schläuche oder Kabel eine verringerte Besiedlung mit Bakterien, Algen oder kleinen Tieren auf der Oberfläche aufweisen. Die Gebrauchsdauer der seismischen Schläuche oder Kabel enthaltend TPU sollte entsprechend deutlich verlängert werden, ohne daß ein manuelles Entfernen der Bakterien, Algen oder kleinen Tiere notwendig werden sollte. Insbesondere sollten die stabilisierten TPU thermoplastisch verarbeitbar sein, ohne daß die Stabilisierung verlorengeht. Da die thermoplastische Verarbeitung der TPU bei Temperaturen von größer 200°C erfolgt, müssen geeignete Stabilisatoren/Inhibitoren außergewöhnlich temperaturstabil sein, um ihre Aufgabe auch anschließend erfüllen zu können. Dies kann von gängigen Stabilisatoren/Inhibitoren, die aus Anwendungen bekannt sind, bei denen keine hohen Temperaturen auftreten, nicht erwartet werden. Des weiteren sollten die TPU in ihrer Transparenz nicht wesentlich beeinträchtigt werden.

Diese Aufgabe konnte durch die eingangs beschriebenen TPU gelöst werden.

Die erfindungsgemäßen TPU, enthaltend mindestens einen der erfindungsgemäßen Inhibitoren, können in Mischung mit weiteren thermoplastischen Kunststoffen, beispielsweise Acrylsäure-Butadien-Styrol-Copolymeren (ABS), ASA, SAN, PE, PP, EPM, EPDM, PVC, Acrylatkautschuk, Polyester, Polyoxymethylen (POM), Polyamid (PA) und/oder PC (Polycarbonat), bevorzugt ABS, eingesetzt werden, wobei diese Mischungen nach allgemein bekannten Verfahren, beispielsweise durch gemeinsame Extrusion oder während der TPU-Synthese auf dem Reaktionsextruder, hergestellt werden können. Die weiteren thermoplastischen Kunststoffe, Verfahren zu ihrer Herstellung und ihr Aufbau ist allgemein bekannt und in der Fachliteratur vielfältig beschrieben.

Als erfindungsgemäße Inhibitoren werden Verbindungen eingesetzt, die Benzisothiazolinon, bevorzugt 1,2-Benzisothiazolin-3-on, besonders bevorzugt alkyliertes 1,2-Benzisothiazolin-3-on als Struktureinheit aufweisen, beispielsweise Verbindungen gemäß der folgenden allgemeinen Strukturformel I:

### Strukturformel I:

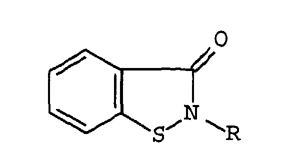

mit den folgenden Bedeutungen für R: Alkyl, z.B. Methyl, Ethyl, Propyl, Isopropyl, n-Butyl, Isobutyl, Pentyl, Hexyl, Heptyl, Oktyl oder Nonyl.

Bevorzugt wird als Inhibitor ein Alkylbenzisothiazolinon der chemischen Formel 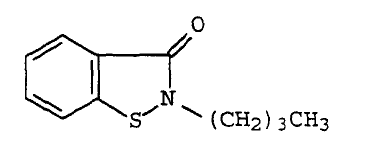 eingesetzt, das unter der Marke Vanquish® 100 bei der Firma Zeneca Biocides erhältlich ist.

Bevorzugt enthalten die TPU die Inhibitoren in einer Menge von 0,01 bis 10 Gew.-%, besonders bevorzugt 0,1 bis 5 Gew.-%, insbesondere 0,3 bis 3 Gew.-%, jeweils bezogen auf das Gewicht des TPUs oder, falls zusätzlich zum TPU weitere thermoplastische Kunststoffe enthalten sind, bezogen auf das Gewicht aller thermoplastischen. Kunststoffe einschließlich des TPUs.

Die erfindungsgemäßen Inhibitoren, die fest, flüssig oder in Form eines Masterbatches auf Basis TPU oder eines anderen thermoplastischen Kunststoffes (PVC) vorliegen können, können sowohl den gegenüber Isocyanaten reaktiven Verbindungen (b) vor oder bei der Herstellung der TPU als auch dem fertigen TPU, beispielsweise dem geschmolzenen oder erweichtem TPU zugeführt werden. Das thermoplastische Polyurethan kann thermoplastisch verarbeitet werden, ohne daß die Wirkung der erfindungsgemäßen Inhibitoren verlorengeht. Dies war aufgrund der sehr hohen Temperaturbelastung bei der thermoplastischen Verarbeitung der TPU überraschend und auf der Grundlage des Standes der Technik nicht zu erwarten.

Beispielsweise können demnach die erfindungsgemäßen TPU dadurch hergestellt werden, daß man ein thermoplastisches Polyurethan (i), das gegebenenfalls weitere thermoplastische Kunststoffe enthalten kann, mit einem thermoplastischen Kunststoff (ii), einem "Masterbatch" beispielsweise auf der Basis von TPU und/oder PVC, mischt, wobei (ii) mindestens eine Verbindung enthält, die Benzisothiazolinon als Struktureinheit aufweist. Da die Inhibitoren durch (ii) dem TPU bzw. Mischungen enthaltend TPU und mindestens einen weiteren thermoplastischen Kunststoff (i) zugeführt werden, enthält (ii) die Inhibitoren bevorzugt in einer hohen Konzentration, üblicherweise bis 30 Gew.-%, bezogen auf das Gesamtgewicht von (ii).

Besondere Vorteile weist die Erfindung in marinen Anwendungen auf, d.h. in Anwendungen, die in sehr feuchter und warmer Umgebung, insbesondere in feucht-salziger Umgebung erfolgen, beispielsweise in der Binnen- und/oder bevorzugt in der Hochseeschiffahrt. Besonders bevorzugt sind erfindungsgemäß seismische Schläuche und/oder Kabel enthaltend die erfindungsgemäßen TPU oder Mischungen bzw. die Verwendung der TPU oder der Mischungen in marinen Anwendungen. Wie eingangs geschildert, werden derartige seismische Schläuche für Untersuchungen auf See eingesetzt.

Verfahren zur Herstellung von TPU sind allgemein bekannt. Beispielsweise können die thermoplastischen Polyurethane durch Umsetzung von (a) Isocyanaten mit (b) gegenüber Isocyanaten reaktiven Verbindungen mit einem Molekulargewicht von 500 bis 10000 und gegebenenfalls (c) Kettenverlängerungsmitteln mit einem Molekulargewicht von 50 bis 499 gegebenenfalls in Gegenwart von (d) Katalysatoren und/oder (e) üblichen Hilfs- und/oder Zusatzstoffen herstellt werden, wobei man die Umsetzung in Gegenwart der erfindungsgemäßen Inhibitoren durchführt.

Im Folgenden sollen beispielhaft die Ausgangskomponenten und Verfahren zur Herstellung der bevorzugten TPU dargestellt werden.

Die bei der Herstellung der TPU üblicherweise verwendeten Komponenten (a), (b) sowie gegebenenfalls (c), (e) und/oder (f) sollen im Folgenden beispielhaft beschrieben werden:
a) Als organische Isocyanate (a) können allgemein bekannte aliphatische, cycloaliphatische, araliphatische und/oder aromatische Isocyanate eingesetzt werden, beispielsweise Tri-, Tetra-, Penta-, Hexa-, Hepta- und/oder Oktamethylendiisocyanat, 2-Methyl-pentamethylen-diisocyanat-1,5, 2-Ethylbutylen-diisocyanat-1,4, Pentamethylen-diisocyanat-1,5, Butylen-diisocyanat-1,4, 1-Isocyanato-3,3,5-trimethyl-5-isocyanatomethyl-cyclohexan (Isophoron-diisocyanat, IPDI), 1,4- und/oder 1,3-Bis(isocyanatomethyl)cyclohexan (HXDI), 1,4-Cyclohexan-diisocyanat, 1-Methyl-2,4- und/oder -2,6-cyclohexan-diisocyanat und/oder 4,4'-, 2,4'- und 2,2'-Dicyclohexylmethan-diisocyanat, 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), Diphenylmethandiisocyanat, 3,3'-Dimethyl-diphenyl-diisocyanat, 1,2-Diphenylethandiisocyanat und/oder Phenylendiisocyanat.
b) Als gegenüber Isocyanaten reaktive Verbindungen (b) können die allgemein bekannten gegenüber Isocyanaten reaktiven Verbindungen eingesetzt werden, beispielsweise Polyesterole, Polyetherole und/oder Polycarbonatdiole, die üblicherweise auch unter dem Begriff "Polyole" zusammengefaßt werden, mit Molekulargewichten von 500 bis 8000, bevorzugt 600 bis 6000, insbesondere 800 bis 4000, und bevorzugt einer mittleren Funktionalität von 1,8 bis 2,3, bevorzugt 1,9 bis 2,2, insbesondere 2. Bevorzugt setzt man Polyetherpolyole ein, beispielsweise solche auf der Basis von allgemein bekannten Startersubstanzen und üblichen Alkylenoxiden, beispielsweise Ethylenoxid, Propylenoxid und/oder Butylenoxid, bevorzugt Polyetherole basierend auf Propylenoxid-1,2 und Ethylenoxid und insbesondere Polyoxytetramethylen-glykole. Die Polyetherole weisen den Vorteil auf, daß sie eine höhere Hydrolysestabilität als Polyesterole besitzen.
c) Als Kettenverlängerungsmittel (c) können allgemein bekannte aliphatische, araliphatische, aromatische und/oder cycloaliphatische Verbindungen mit einem Molekulargewicht von 50 bis 499, bevorzugt 2-funktionelle Verbindungen, eingesetzt werden, beispielsweise Diamine und/oder Alkandiole mit 2 bis 10 C-Atomen im Alkylenrest, insbesondere Butandiol-1,4, Hexandiol-1,6 und/oder Di-, Tri-, Tetra-, Penta-, Hexa-, Hepta-, Okta-, Nona- und/oder Dekaalkylenglykole mit 3 bis 8 Kohlenstoffatomen, bevorzugt entsprechende Oligo- und/oder Polypropylenglykole, wobei auch Mischungen der Kettenverlängerer eingesetzt werden können.
d) Geeignete Katalysatoren, welche insbesondere die Reaktion zwischen den NCO-Gruppen der Diisocyanate (a) und den Hydroxylgruppen der Aufbaukomponenten (b) und (c) beschleunigen, sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan und ähnliche sowie insbesondere organische Metallverbindungen wie Titansäureester, Eisenverbindungen wie z.B. Eisen-(III)-acetylacetonat, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,0001 bis 0,1 Gew.-Teilen pro 100 Gew.-Teile Polyhydroxylverbindung (b) eingesetzt.
e) Neben Katalysatoren (d) können den Aufbaukomponenten (a) bis (c) auch übliche Hilfsmittel und/oder Zusatzstoffe (e) hinzugefügt werden. Genannt seien beispielsweise oberflächenaktive Substanzen, Füllstoffe, Flammschutzmittel, Keimbildungsmittel, Oxidationsstabilisatoren, Gleit- und Entformungshilfen, Farbstoffe und Pigmente, gegebenenfalls zusätzlich zu den erfindungsgemäßen Inhibitoren weitere Stabilisatoren, z.B. gegen Hydrolyse, Licht, Hitze oder Verfärbung, anorganische und/oder organische Füllstoffe, Verstärkungsmittel und Weichmacher.

Nähere Angaben über die oben genannten Hilfsmittel- und Zusatzstoffe sind der Fachliteratur zu entnehmen.

Alle in dieser Schrift genannten Molekulargewichte weisen die Einheit [g/mol] auf.

Zur Einstellung von Härte der TPU können die Aufbaukomponenten (b) und (c) in relativ breiten molaren Verhältnissen variiert werden. Bewährt haben sich molare Verhältnisse von Komponente (b) zu insgesamt einzusetzenden Kettenverlängerungsmitteln (c) von 10 : 1 bis 1 : 10 , insbesondere von 1 : 1 bis 1 : 4, wobei die Härte der TPU mit zunehmendem Gehalt an (c) ansteigt.

Bevorzugt werden zur Herstellung der TPU auch Kettenverlängerer (c) verwendet.

Die Umsetzung kann bei üblichen Kennzahlen erfolgen, bevorzugt bei einer Kennzahl von 60 bis 120, besonders bevorzugt bei einer Kennzahl von 80 bis 110. Die Kennzahl ist definiert durch das Verhältnis der insgesamt bei der Umsetzung eingesetzten Isocyanatgruppen der Komponente (a) zu den gegenüber Isocyanaten reaktiven Gruppen, d.h. den aktiven Wasserstoffen, der Komponenten (b) und (c). Bei einer Kennzahl von 100 kommt auf eine Isocyanatgruppe der Komponente (a) ein aktives Wasserstoffatom, d.h. eine gegenüber Isocyanaten reaktive Funktion, der Komponenten (b) und (c). Bei Kennzahlen über 100 liegen mehr Isocyanatgruppen als OH-Gruppen vor.

Die Herstellung der TPU kann nach den bekannten Verfahren kontinuierlich, beispielsweise mit Reaktionsextrudern oder dein Bandverfahren nach one-shot oder dem Prepolymerverfahren, oder diskontinuierlich nach dem bekannten Prepolymerprozeß erfolgen. Bei diesen Verfahren können die zur Reaktion kommenden Komponenten (a), (b) und gegebenenfalls (c), (d) und/oder (e) nacheinander oder gleichzeitig miteinander vermischt werden, wobei die Reaktion unmittelbar einsetzt.

Beim Extruderverfahren werden die Aufbaukomponenten (a), (b) sowie gegebenenfalls (c), (d) und/oder (e) einzeln oder als Gemisch in den Extruder eingeführt, z.B. bei Temperaturen von 100 bis 280°C, vorzugsweise 140 bis 250°C zur Reaktion gebracht, das erhaltene TPU wird extrudiert, abgekühlt und granuliert.

Die Verarbeitung der erfindungsgemäß hergestellten TPU, die üblicherweise als Granulat oder in Pulverform vorliegen, zu den gewünschten Folien, Formteilen, Rollen, Fasern, Verkleidungen in Automobilen, Schläuchen, Kabelsteckern, Faltenbälgen, Schleppkabeln, Kabelummantelungen, Dichtungen, Riemen oder Dämpfungselementen, bevorzugt seismischen Schläuchen oder Kabeln, erfolgt nach üblichen Verfahren, wie z. B. Spritzguß oder Extrusion.

Die nach den erfindungsgemäßen Verfahren herstellbaren thermoplastischen Polyurethane, bevorzugt die Folien, Formteile, Schuhsohlen, Rollen, Fasern, Verkleidungen in Automobilen, Wischerblätter, Schläuche, Kabelstecker, Faltenbälge, Schleppkabel, Kabelummantelungen, Dichtungen, Riemen oder Dämpfungselemente, insbesondere die seismischen Schläuche oder Kabel, weisen die eingangs dargestellten Vorteile auf.

Die erfindungsgemäßen Vorteile sollen anhand der folgenden Beispiele dargestellt werden.

### Beispiele

Als Prüfkörper in den Beispielen 1 bis 8 wurden Elastollan 1185 A (Elastogran GmbH) bzw. eine Mischung aus Elastollan 1185 A und ABS eingesetzt. Die Prüfkörper enthielten die in den Tabellen 1 und 2 angegebenen Mengen an Inhibitoren. Die Zugabe der Inhibitoren erfolgte durch Zugabe des Inhibitors zum Polyol vor der Herstellung des TPUs. Die Mischung des Beispiels 8 wurde durch anschließende Konfektionierung des TPUs mit dem ABS hergestellt.

Zur Überprüfung der Wirksamkeit der erfindungsgemäßen Stabilisierung wurden die Prüfkörper ohne und mit Zusatz der Inhibitoren in einer sogenannten Inkubationsbox mit einer Sporenmischung enthaltend Pilzsporen besprüht. Für die Untersuchung auf Pilze wurden die Prüfkörper in der geschlossenen Box bei 21°C für 28 Tage gelagert, anschließend mit Methylenblau gefärbt und die Belagbildung beurteilt.

Zur Untersuchung auf Algen wurden die Prüfkörper auf die angefeuchtete Oberfläche von Vermiculite Betten gelegt und mit den Algen geimpft. Dazu wurde die Oberfläche der Prüfplatten mit einer Algenlösung bestrichen. Die Inkubationsboxen wurden verschlossen und unter Fluoreszenzlicht schwacher Intensität für 8 Wochen gelagert und dabei alle 24 Stunden mit einer Mineralsalzlösung sowie in den ersten sieben Wochen mit destilliertem Wasser besprüht.

Für diese Untersuchungen wurden gealterte und nicht gealterte Proben eingesetzt. Die gealterten Prüfkörper wurden vor dem Besprühen und der oben dargestellten Lagerung 100 Stunden in einem Atlas ES-25 Weathero-meter mit kontinuierlichem UV-Licht gelagert und alle 10 Minuten für 2 Minuten mit Wasser besprüht.

**Tabelle 1**

| Stabilisierung gegen Pilze | | | |
|---|---|---|---|
| Beispiel | Vanquish® 100 [Gew.-% im TPU] | Nicht-gealterte Probe | Gealterte Probe |
| 1 | 0 | 2 | 3 |
| 2 | 0,05 | 0 | 1 |
| 3 | 0,1 | 0 | 0 |
| 4 | 0,2 | 0 | 0 |
| 5 | 0,4 | 0 | 0 |
| 6 | 0,5 | 0 | 0 |
| 7 | 0,6 | 0 | 0 |
| 8 | 0,55 in der Mischung TPU-ABS | 0 | 0 |

Die in der Tabelle 1 aufgeführten Zahlenwerte geben die Beurteilung zum Befall der Prüfkörper mit Pilzen mit den folgenden Bedeutungen an:
0: kein sichtbarer Befall
1: Spuren an Wachstum
2: 1 bis 10 % Befall über die gesamte Oberfläche
3: 11 bis 30 % Befall über die gesamte Oberfläche
4: 31 bis 70 % Befall über die gesamte Oberfläche
5: > 70 % Wachstum über die gesamte Oberfläche

Es wird deutlich, daß bereits geringe Mengen der erfindungsgemäßen Inhibitoren ausreichen, um ein Wachstum der Pilze auf der Oberfläche der Prüfkörper erfolgreich zu verhindern.

**Tabelle 2**

| Stabilisierung gegen Algen | | | |
|---|---|---|---|
| Beispiel | Vanquish® 100 [Gew.-% im TPU] | Nicht-gealterte Probe | Gealterte Probe |
| 1 | 0 | 3 | 3 |
| 2 | 0,05 | 3 | 3 |
| 3 | 0,1 | 2 | 2 |
| 4 | 0,2 | 2 | 2 |
| 5 | 0,4 | 0 | 1 |
| 6 | 0,5 | 1 | 0 |
| 7 | 0,6 | 1 | 0 |
| 8 | 0,55 in der Mischung TPU-ABS | 2 | 2 |

Die in der Tabelle 2 aufgeführten Zahlenwerte geben die Beurteilung zum Befall der Prüfkörper mit Algen mit den folgenden Bedeutungen an:
0: kein sichtbaren Wachstum
1: 1 % bis 25 % Wachstum auf der gesamten Oberfläche
2: 26 bis 50 % Wachstum
3: 51 bis 75 % Wachstum
4: 76 bis 100 % Wachstum

Mit höheren Konzentrationen an Inhibitor kann die Bildung von Algen an der Oberfläche der Prüfkörper auch in salzhaltigem Wasser verhindert oder mindestens verzögert werden. Durch die Zugabe des Inhibitors wird die Transparenz der Proben nicht bzw. nur geringfügig beeinflußt. Diese besonders gute Stabilisierung gegen Algen insbesondere unter "marinen" Bedingungen ist, da diese Bedingungen nicht mit üblichen Stabilisierungsbedingungen vergleichbar sind, nicht zu erwarten gewesen.

## Patentansprüche

1. Thermoplastisches Polyurethan enthaltend Verbindungen, die Benzisothiazolinon als Struktureinheit aufweisen.

2. Thermoplastisches Polyurethan gemäß Anspruch 1 enthaltend Verbindungen, die als Struktureinheit 1,2-Benzisothiazolin-3-on aufweisen.

3. Thermoplastisches Polyurethan gemäß Anspruch 1 enthaltend alkyliertes 1,2-Benzisothiazolin-3-on.

4. Mischungen enthaltend thermoplastische Polyurethane gemäß einem der Ansprüche 1 bis 3 sowie mindestens einen weiteren thermoplastischen Kunststoff.

5. Seismische Schläuche und/oder Kabel enthaltend thermoplastisches Polyurethan gemäß einem der Ansprüche 1 bis 3 oder Mischungen gemäß Anspruch 4.

6. Verwendung von thermoplastischem Polyurethan gemäß einem der Ansprüche 1 bis 3 oder Mischungen gemäß Anspruch 4 in marinen Anwendungen.

7. Verfahren zur Herstellung von thermoplastischen Polyurethanen durch Umsetzung von (a) Isocyanaten mit (b) gegenüber Isocyanaten reaktiven Verbindungen mit einem Molekulargewicht von 500 bis 10000 und gegebenenfalls (c) Kettenverlängerungsmitteln mit einem Molekulargewicht von 50 bis 499 gegebenenfalls in Gegenwart von (d) Katalysatoren und/oder (e) üblichen Hilfs- und/oder Zusatzstoffen, dadurch gekennzeichnet, daß man die Umsetzung in Gegenwart von Verbindungen durchführt, die Benzisothiazolinon als Struktureinheit aufweisen.

8. Verfahren zur Herstellung von thermoplastischen Polyurethanen, dadurch gekennzeichnet, daß man thermoplastisches Polyurethan (i) mit einem thermoplastischen Kunststoff (ii) mischt, wobei (ii) mindestens eine Verbindung enthält, die Benzisothiazolinon als Struktureinheit aufweist.
